# EUROPEAN PATENT APPLICATION

(11) **EP 4 765 696 A1**
(43) Date of publication of application: **24.06.2026**
(21) Application number: 24878601.4
(22) Date of filing: 25.07.2024
(51) Int. Cl.: H04L 1/00

(54) **DATA TRANSMISSION METHOD AND APPARATUS, OPTICAL COMMUNICATION DEVICE, SYSTEM, AND MEDIUM**

(30) Priority: 19.10.2023 CN 202311366007
(71) Applicant: HUAWEI TECHNOLOGIES CO., LTD., Shenzhen 518129 (CN)
(72) Inventor: YAN, Linzhi, Shenzhen, Guangdong 518129 (CN); ZHANG, Lun, Shenzhen, Guangdong 518129 (CN)
(74) Representative: Huawei European IPR
(86) International application number: PCT/CN2024/107615
(87) International publication number: WO 2025/081949

(57) **Abstract**

A data transmission method and apparatus, an optical communication device and system, and a medium are disclosed, and belong to the field of optical communication technologies. The data transmission method includes: A first optical communication device sends first indication information to a second optical communication device, where the first indication information indicates a target forward error correction FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads. The first optical communication device receives the upstream burst data sent by the second optical communication device, where the upstream burst data includes at least one FEC codeword, and the at least one FEC codeword is obtained by encoding by using the target FEC codeword format. This helps flexibly configure the FEC codeword format used by the second optical communication device.

## Description

This application claims priority to Chinese Patent Application No. 2023113660070, filed on October 19, 2023 and entitled "DATA TRANSMISSION METHOD AND APPARATUS, OPTICAL COMMUNICATION DEVICE AND SYSTEM, AND MEDIUM", which is incorporated herein by reference in its entirety.

### TECHNICAL FIELD

This application relates to the field of optical communication technologies, and in particular, to a data transmission method and apparatus, an optical communication device and system, and a medium.

### BACKGROUND

A passive optical network (passive optical network, PON) is a point-to-multipoint single-fiber bidirectional optical access network. A PON system usually includes a first optical communication device, an optical distribution network (optical distributed network, ODN), and a plurality of second optical communication devices. The first optical communication device is connected to the plurality of second optical communication devices via the ODN.

The second optical communication device needs to first perform forward error correction (forward error correction, FEC) encoding on valid data to obtain at least one FEC codeword, and then sends upstream burst data including the at least one FEC codeword to the first optical communication device. In a related technology, the first optical communication device may determine, based on optical path quality of the second optical communication device, an FEC codeword format used by the second optical communication device, and notify the second optical communication device of the determined FEC codeword format.

However, an FEC codeword format used by each second optical communication device is specified by the first optical communication device, and is fixed. The FEC codeword format used by the second optical communication device is monotonous.

### SUMMARY

This application provides a data transmission method and apparatus, an optical communication device and system, and a medium, to flexibly adjust an FEC codeword format used by a second optical communication device.

According to a first aspect, this application provides a data transmission method. The method may be performed by a first optical communication device. The method includes: The first optical communication device sends first indication information to a second optical communication device, where the first indication information indicates a target FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads. The first optical communication device receives the upstream burst data sent by the second optical communication device, where the upstream burst data includes at least one FEC codeword, and the at least one FEC codeword is obtained by encoding by using the target FEC codeword format.

In this application, the first optical communication device indicates, by using the first indication information, the FEC codeword format used by the second optical communication device for sending the upstream burst data. In addition, when the lengths of the upstream burst data belong to different data length ranges, the corresponding FEC codeword formats are different. In this way, the FEC codeword format used by the second optical communication device can be flexibly configured.

In a first possible implementation, the first indication information directly indicates the target FEC codeword format. For example, the first indication information is an identifier of the target FEC codeword format.

When the first indication information directly indicates the target FEC codeword format, the identifier of the target FEC codeword format may be carried in a bandwidth map (bandwidth map, BWMAP) field of a superframe header. In this way, the first optical communication device may separately indicate the target FEC encoding format to each piece of upstream burst data of each second optical communication device, and flexibility is high.

For example, the BWMAP field may include at least one allocation structure, and each allocation structure corresponds to one second optical communication device and indicates an upstream slot allocated to the corresponding second optical communication device. Each allocation structure includes a burst profile subfield, and the identifier of the target FEC codeword format may be carried in the burst profile subfield. In this way, an existing frame header format does not need to be modified, which facilitates application implementation of the method.

Optionally, the method further includes: The first optical communication device sends second indication information to the second optical communication device, where the second indication information includes a correspondence between an FEC codeword format and an identifier. In this way, the second optical communication device can learn of the correspondence between an FEC codeword format and an identifier, so that the target FEC codeword format can be subsequently determined based on the first indication information and the correspondence between an FEC codeword format and an identifier.

Optionally, the second indication information is carried in an optical network unit management and control interface (ONU management and control interface, OMCI) message or a physical layer operations, administration, and maintenance (physical layer operations, administration, and maintenance, PLOAM) message.

In a second possible implementation, the first indication information indirectly indicates the target FEC codeword format. For example, the first indication information indicates a correspondence between a data length range and an FEC codeword format, and different data length ranges correspond to different FEC codeword formats.

In this implementation, the first optical communication device and the second optical communication device each determine the corresponding target FEC codeword format based on the length of the upstream burst data of the ONU, and the first optical communication device does not need to send, frame by frame, the first indication information indicating the target FEC codeword format.

When the first indication information indirectly indicates the target FEC codeword format, the first indication information may be carried in an OMCI message or a PLOAM message.

Optionally, the method further includes: The first optical communication device determines the length of the upstream burst data of the second optical communication device, and generates the first indication information based on the length of the upstream burst data of the second optical communication device. That the first optical communication device determines the length of the upstream burst data of the second optical communication device herein means that the first optical communication device determines an upstream slot allocated to the second optical communication device, and a length of the upstream slot allocated to the second optical communication device is the length of the upstream burst data of the second optical communication device.

Optionally, the method further includes: determining a first encoding strategy of the second optical communication device based on link quality of the second optical communication device, where the first encoding strategy indicates a correspondence between a data length range and an FEC codeword format, and different data length ranges correspond to different FEC codeword formats; and determining the target FEC codeword format based on the first encoding strategy and the length of the upstream burst data.

When the link quality of the ONU changes, error correction capabilities of the FEC codeword are different. For example, when the link quality is good, a requirement on the error correction capability of the FEC codeword is low; or when the link quality is poor, a requirement on the error correction capability of the FEC codeword is high. Therefore, the first encoding strategy of the second optical communication device may be determined based on the link quality, to meet a data transmission performance requirement.

Optionally, the method further includes: when a change amount of the link quality of the second optical communication device reaches a specified value, determining a second encoding strategy of the second optical communication device based on changed link quality, where the second encoding strategy indicates a correspondence between a data length range and an FEC codeword format, different data length ranges correspond to different FEC codeword formats, and manners of data length range division that correspond to the first encoding strategy and the second encoding strategy are different.

When the link quality of the ONU changes, the encoding strategy corresponding to the ONU may be properly adjusted, to further meet the data transmission performance requirement.

According to a second aspect, this application provides a data transmission method. The method may be performed by a second optical communication device. The method includes: The second optical communication device receives first indication information sent by a first optical communication device, where the first indication information indicates a target FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads; and sends the upstream burst data to the first optical communication device, where the upstream burst data includes at least one FEC codeword, and the at least one FEC codeword is obtained by encoding by using the target FEC codeword format.

For related content of the first indication information, refer to the first aspect. Details are not described herein again.

When the first indication information directly indicates the target FEC codeword format, the method further includes: receiving second indication information sent by the first optical communication device, where the second indication information includes a correspondence between an FEC codeword format and an identifier. For related content of the second indication information, refer to the first aspect. Details are not described herein again.

Optionally, when the first indication information directly indicates the target FEC codeword format, the method further includes: determining the target FEC codeword format based on the first indication information and the correspondence between an FEC codeword format and an identifier.

Optionally, when the first indication information indirectly indicates the target FEC codeword format, the method further includes: determining the target FEC codeword format based on a correspondence between a data length range and an FEC codeword format and the length of the upstream burst data sent by the second optical communication device.

Optionally, in the first aspect or the second aspect, a coding overhead of an FEC codeword format corresponding to a first data length range is greater than a coding overhead of an FEC codeword format corresponding to a second data length range, and any length in the first data length range is greater than any length in the second data length range. When the length of the upstream burst data of the ONU is short, a data transmission performance requirement (for example, a bit error rate requirement) may be met by using only a low coding overhead. In this case, using a codeword format with the low coding overhead helps increase effective upstream bandwidth.

Optionally, in the first aspect or the second aspect, the first optical communication device may be an OLT, and the second optical communication device may be the ONU.

According to a third aspect, this application provides a data transmission apparatus. The data transmission apparatus has a function of implementing the method according to any one of the first aspect or the optional manners of the first aspect. The function may be implemented by hardware, or may be implemented by hardware by executing corresponding software. The hardware or the software includes one or more units corresponding to the foregoing function.

According to a fourth aspect, this application provides a data transmission apparatus. The data transmission apparatus has a function of implementing the method according to any one of the second aspect or the optional manners of the second aspect. The function may be implemented by hardware, or may be implemented by hardware by executing corresponding software. The hardware or the software includes one or more units corresponding to the foregoing function.

According to a fifth aspect, an optical communication device is provided. The optical communication device includes a processor and a memory. The memory is configured to store a software program and a module. The processor runs or executes the software program and/or the module stored in the memory to implement the method in any one of the first aspect or the possible implementations of the first aspect, or implement the method in any one of the second aspect or the possible implementations of the second aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

According to a sixth aspect, a computer program product is provided. The computer program product includes computer program code. When the computer program code is run by a computer, the computer is enabled to perform the method in any one of the first aspect or the possible implementations of the first aspect, or perform the method in any one of the second aspect or the possible implementations of the second aspect.

According to a seventh aspect, this application provides a computer-readable storage medium. The computer-readable storage medium is used to store program code executed by a processor, and the program code includes instructions for implementing the method in any one of the possible implementations of the first aspect, or implementing the method in any one of the second aspect or the possible implementations of the second aspect.

According to an eighth aspect, this application provides a chip, including a processor. The processor is configured to invoke, from a memory, instructions stored in the memory and run the instructions, to enable an optical communication device in which the chip is installed to perform the method in any one of the possible implementations of the first aspect, or perform the method in any one of the second aspect or the possible implementations of the second aspect.

According to a ninth aspect, this application provides another chip. The another chip includes an input interface, an output interface, a processor, and a memory. The input interface, the output interface, the processor, and the memory are connected through an internal connection path. The processor is configured to execute code in the memory. When the code is executed, the processor is configured to perform the method in any one of the possible implementations of the first aspect, or perform the method in any one of the second aspect or the possible implementations of the second aspect.

### BRIEF DESCRIPTION OF DRAWINGS

FIG. 1 is a diagram of a structure of a PON system according to an embodiment of this application;
FIG. 2 is a diagram of a data transmission method according to an embodiment of this application;
FIG. 3 is a diagram of another data transmission method according to an embodiment of this application;
FIG. 4 is a diagram of a structure of a frame header according to an embodiment of this application;
FIG. 5 is a diagram of a process of generating first indication information according to an embodiment of this application;
FIG. 6 is a diagram of another data transmission method according to an embodiment of this application;
FIG. 7 is a block diagram of a data transmission apparatus according to an embodiment of this application;
FIG. 8 is a block diagram of another data transmission apparatus according to an embodiment of this application; and
FIG. 9 is a diagram of a structure of an optical communication device according to an embodiment of this application.

### DESCRIPTION OF EMBODIMENTS

To make objectives, technical solutions, and advantages of this application clearer, the following further describes implementations of this application in detail with reference to the accompanying drawings.

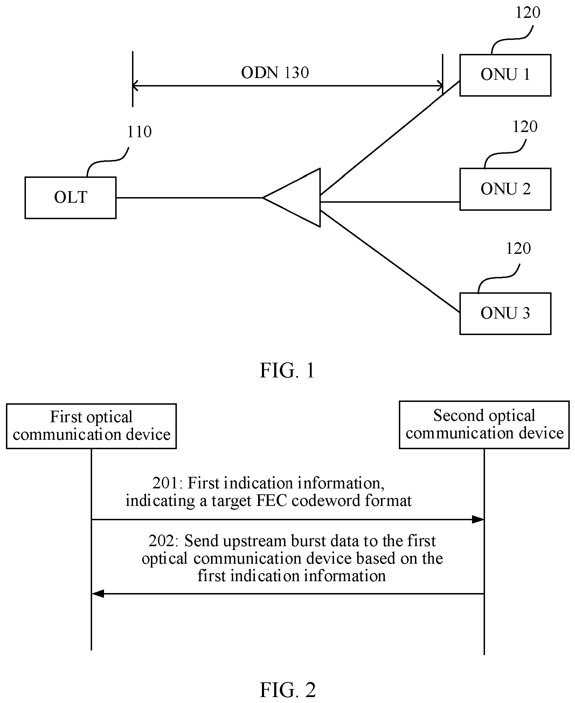

FIG. 1 is a diagram of a PON system according to an embodiment of this application. As shown in FIG. 1, the PON system includes an OLT 110, ONUs 120, and an ODN 130. The OLT 110 is connected to one or more ONUs 120 via the ODN 130. The ONU 120 may be an optical network terminal (optical network terminal, ONT).

The OLT 110 is usually located on a network side, for example, a central office (central office, CO), and may manage a plurality of ONUs 120 together. The OLT 110 may act as a medium between the ONU 120 and an upper-layer network (not shown in the figure), to forward data received from the upper-layer network to the ONU 120, and forward data received from the ONU 120 to the upper-layer network. The upper-layer network includes but is not limited to the Internet, a public switched telephone network (public switched telephone network, PSTN), a community antenna television (community antenna television, CATV), and the like.

The plurality of ONUs 120 may be disposed on a user side in a distributed manner. The ONU 120 may be a network device configured to communicate with the OLT 110 and user equipment. The ONU 120 may act as a medium between the OLT 110 and the user equipment. For example, the ONU 120 may forward data received from the OLT 110 to the user equipment, and forward data received from the user equipment to the OLT 110.

The ODN 130 is a data distribution/multiplexing system, and may include a feeder fiber, a passive optical splitter, and a user fiber. The passive optical splitter may include one first port and a plurality of second ports. The first port of the passive optical splitter is connected to the OLT 110 through the feeder fiber, and each second port of the passive optical splitter is connected to one ONU 120 through a user fiber.

In this embodiment of this application, the PON system may be a gigabit-capable PON (gigabit-capable PON, GPON) system, a 10 gigabit per second PON (10 gigabit per second PON, XG-PON) system, a 10-gigabit-capable symmetric passive optical network (10-gigabit-capable symmetric passive optical network, XGS-PON) system, an Ethernet PON (Ethernet PON, EPON) system, a 10 gigabit per second EPON (10 gigabit per second EPON, 10G-EPON) system, a 25 gigabit per second PON (25 gigabit per second PON, 25G-PON) system, a 50 gigabit per second PON (50 gigabit per second PON, 50G-PON) system, a 100 gigabit per second PON (100 gigabit per second PON, 100G-PON) system, a 25 gigabit per second EPON (25 gigabit per second EPON, 25G-EPON) system, a 50 gigabit per second EPON (50 gigabit per second EPON, 50G-EPON) system, a GPON system or an EPON system with another rate, or the like.

In the PON system, downstream is from the OLT 110 to the ONU 120, the OLT 110 broadcasts downstream data to all the ONUs 120, and each ONU 120 receives only data that carries an identifier of the ONU 120. On the contrary, upstream is from the ONU 120 to the OLT 110. Because the ONUs 120 share the ODN 130 and the OLT 110, to ensure that upstream data of the ONUs 120 does not conflict with each other, the PON system performs transmission of the upstream data in a time division multiplexing (time division multiplexing, TDM) manner. To be specific, the OLT 110 allocates an upstream slot to each ONU 120, and each ONU 120 sends the upstream data based on the upstream slot allocated by the OLT 110.

When sending the upstream data to the OLT 110, the ONU 120 needs to first perform FEC encoding on to-be-sent valid data (which may also be referred to as user data), to obtain at least one FEC codeword, and then sends the at least one FEC codeword to the OLT 110. When sending the upstream data, each ONU 120 sends, based on the allocated upstream slot, an optical signal that carries the upstream data. Therefore, an upstream transmission mode is a burst mode, and upstream data carried in an optical signal sent by the ONU 120 in one allocated upstream slot may be referred to as one piece of upstream burst data. Each piece of upstream burst data includes at least one FEC codeword.

Each FEC codeword usually includes two parts: payload data and parity data, and lengths of payload data and/or parity data of different FEC codewords may be different.

At least one ONU 120 supports at least two FEC codeword formats. The codeword format is defined by a payload value and a coding overhead. The payload value indicates a maximum value of an amount of payload data in the FEC codeword, and the coding overhead indicates an amount of parity data in the FEC codeword. Different FEC codeword formats correspond to different coding overheads. In an actual encoding process, the amount of payload data included in the FEC codeword may be less than or equal to the payload value, and the amount of parity data is equal to the coding overhead. When the amount of payload data included in the FEC codeword is less than the payload value, the FEC codeword may be referred to as a shortened code corresponding to a codeword format.

Optionally, an FEC encoding scheme may be low-density parity-check code (low-density parity-check code, LDPC) encoding or the like. For example, for the 50G-PON system, an FEC encoding scheme is the LDPC encoding.

Optionally, the ONU 120 may support at least two of the following three LDPC FEC codeword formats:
codeword format 1 (also referred to as a default codeword or a standard default codeword): (K=1824B, and R=336B);
codeword format 2 (also referred to as a high-throughput codeword): (K=1824B, and R=160B); and
codeword format 3 (also referred to as a high-gain codeword): (K is defined by a manufacturer, and R=384B).

In the three codeword formats, K represents the payload value, R represents the coding overhead, and B is byte (byte).

In this embodiment of this application, the OLT 110 sends first indication information to the ONU 120, to indicate an FEC codeword format used by the ONU 120 when the ONU 120 sends the upstream burst data. When lengths of upstream burst data belong to different data length ranges, corresponding FEC codeword formats are different. That the FEC codeword formats are different herein means that the foregoing coding overheads are different. When the coding overheads are different, a code rate (code rate) of the ONU 120 varies. A larger coding overhead indicates a lower code rate of the ONU 120, but a stronger FEC error correction capability. On the contrary, a smaller coding overhead indicates a higher code rate of the ONU 120, but a weaker FEC error correction capability. The code rate is equal to a ratio of a length of the valid data in the FEC codeword to a length of the FEC codeword. A higher code rate indicates higher transmission efficiency.

Because the length of the upstream burst data of the ONU 120 is not fixed, an FEC shortened code may be used for the FEC codeword in the upstream burst data. In this case, K is equal to an actual length, and R is fixed. For the foregoing codeword format 1 and codeword format 2, when the length of the upstream burst data is less than a threshold, an actual error correction capability of a shortened code corresponding to the codeword format 2 may meet a data transmission quality requirement, but a coding overhead of the shortened code corresponding to the codeword format 2 is less than a coding overhead of a shortened code corresponding to the codeword format 1. In this case, using the codeword format 2 may improve effective upstream bandwidth while ensuring error correction performance.

For example, when the length of the upstream burst data is 400B (payload data), 176B can be saved by using the foregoing codeword format 2 in comparison with the codeword format 1. It is assumed that each superframe has 256 pieces of upstream burst data. In this case, upstream bandwidth of 2.88 Gbps can be saved.

In this embodiment of this application, the lengths of the upstream burst data may be divided into at least two data length ranges, the at least two data length ranges include a first data length range and a second data length range, and any length in the first data length range is greater than any length in the second data length range. A coding overhead of an FEC codeword format corresponding to the first data length range is greater than a coding overhead of an FEC codeword format corresponding to the second data length range. In this way, the OLT 110 may indicate, by using the first indication information, a target FEC codeword format corresponding to the upstream burst data of the ONU 120, so that the ONU can select an FEC codeword format with a large coding overhead when the length of the upstream burst data is long, and select an FEC codeword with a small coding overhead when the length of the upstream burst data is short.

For example, when the ONU 120 supports two FEC codeword formats, the lengths of the upstream burst data may be divided into two data length ranges that respectively correspond to the two FEC codeword formats. For another example, when the ONU 120 supports three FEC codeword formats, the lengths of the upstream burst data may be divided into three data length ranges that respectively correspond to the three FEC codeword formats.

FIG. 2 is a diagram of a data transmission method according to an embodiment of this application. As shown in FIG. 2, the method is jointly performed by a first optical communication device and a second optical communication device. The data transmission method provided in this embodiment of this application is described. The method includes the following steps.

201: The first optical communication device sends first indication information to the second optical communication device, where the first indication information indicates a target FEC codeword format.

The target FEC codeword format is related to a length of upstream burst data of the second optical communication device, lengths of upstream burst data belonging to different data length ranges correspond to different FEC codeword formats, and different FEC codeword formats correspond to different coding overheads.

Correspondingly, the second optical communication device receives the first indication information.

202: The second optical communication device sends the upstream burst data to the first optical communication device based on the first indication information.

The upstream burst data includes at least one FEC codeword, and the at least one FEC codeword is obtained by encoding by using the target FEC codeword format indicated by the first indication information.

In a possible implementation, the first indication information directly indicates the target FEC codeword format. For example, the first indication information is an identifier (identification, ID) of the target FEC codeword format. In this implementation, the second optical communication device determines the target FEC codeword format based on a correspondence between an FEC codeword format and an ID.

In another possible implementation, the first indication information indirectly indicates the target FEC codeword format. For example, the first indication information indicates a correspondence between a data length range and an FEC codeword format, and different data length ranges correspond to different FEC codeword formats. The ONU determines the target FEC codeword format based on the correspondence between a data length range and an FEC codeword format and the length of the upstream burst data. In this implementation, the second optical communication device determines the target FEC codeword format based on the first indication information and the length of the to-be-sent upstream burst data.

After determining the target FEC codeword format, the second optical communication device encodes to-be-sent valid data by using the target FEC codeword format, to obtain the at least one FEC codeword; and then the second optical communication device sends the at least one FEC codeword as the upstream burst data to the OLT. Correspondingly, the first optical communication device receives the upstream burst data. After receiving the upstream burst data, the first optical communication device decodes the received upstream burst data by using the target FEC codeword format.

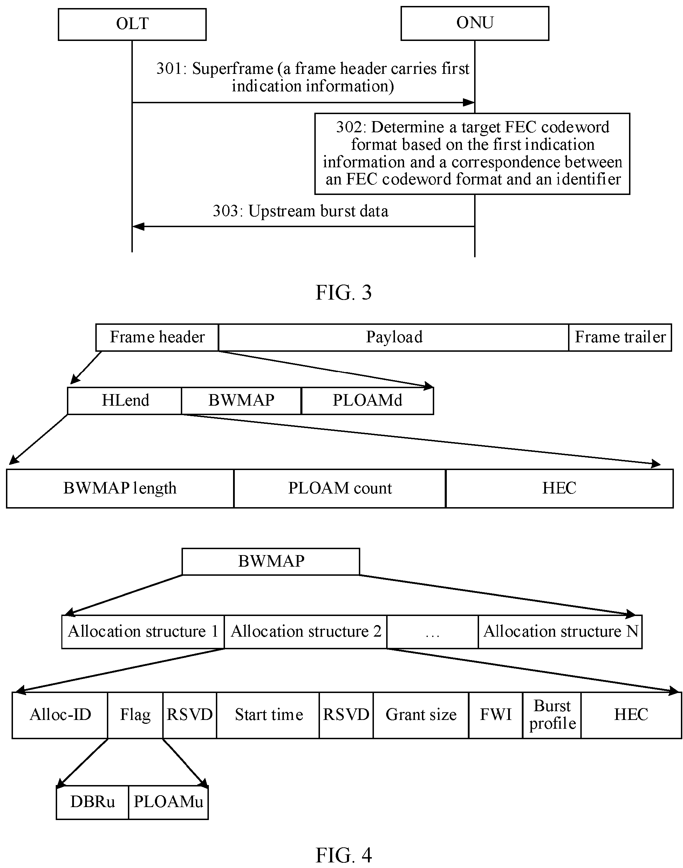

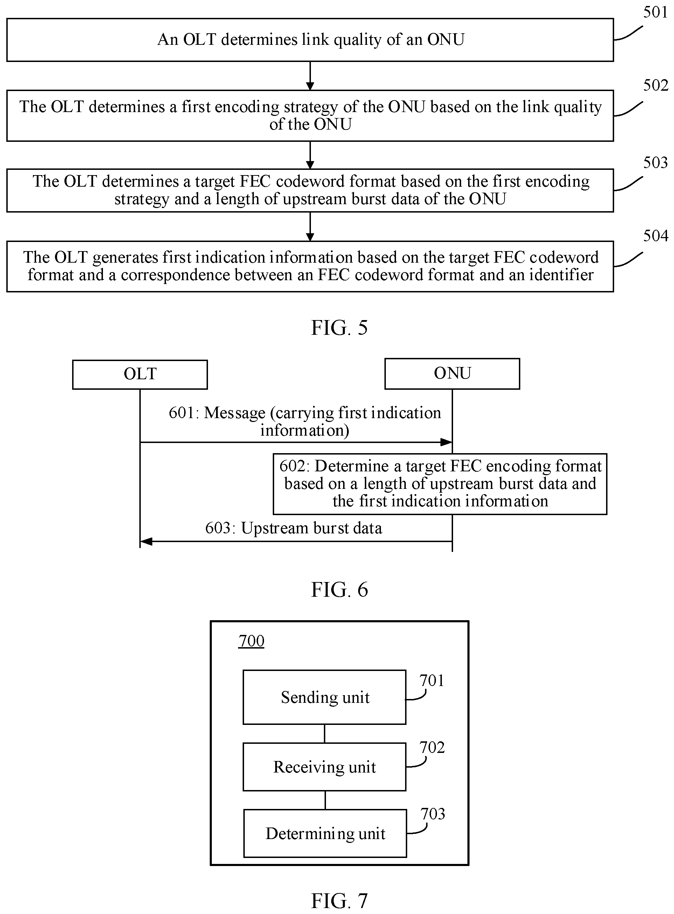

The following uses an example in which the first optical communication device is the OLT and the second optical communication device is the ONU to separately describe the two implementations in detail with reference to FIG. 3 and FIG. 6.

FIG. 3 is a diagram of a data transmission method according to an embodiment of this application. The method is jointly performed by an OLT and an ONU. In this embodiment, first indication information is an ID of a target FEC codeword format. As shown in FIG. 3, the method includes the following steps.

301: The OLT sends a superframe to the ONU, where a frame header of the superframe carries the first indication information.

The superframe may also be referred to as a framing sublayer (framing sublayer, FS) frame. For a 50G-PON system, a length of one superframe is 125 µs. Each superframe includes three parts: a frame header, a payload (payload), and a frame trailer. The frame header includes a plurality of fields, and the plurality of fields include at least a bandwidth map (bandwidth map, BWMAP) field. The BWMAP field indicates an upstream slot allocated by the OLT to the ONU, so that the ONU sends upstream data to the OLT in the allocated upstream slot. The first indication information may be carried in the BWMAP field.

FIG. 4 is a diagram of a structure of a superframe header in a PON system. As shown in FIG. 4, the superframe header includes three fields, where the three fields are a header length downstream (header length downstream, HLend) field, a BWMAP field, and a PLOAM downstream (PLOAM downstream, PLOAMd) field. A length of the HLend field is 4 bytes, and the HLend field includes three subfields. The three subfields in the HLend field are a BWMAP length subfield (11 bits long), a PLOAM count (count) subfield (8 bits long), and a header error check (header error check, HEC) subfield.

The BWMAP field includes a plurality of allocation structures (allocation structures), and each allocation structure corresponds to one ONU and indicates an upstream slot allocated to the corresponding ONU. Each allocation structure includes a plurality of subfields, for example, allocation identifier (alloc-ID), flag (flags), RSVD, start time (start time), reserved field (reserved, RSVD), grant size (grant size) (namely, grant bandwidth), forced wake-up indication (forced wake-up indication, FWI), RSVD, burst profile (burst profile), and hybrid error correction (hybrid error correction, HEC).

A length of the flag subfield is 2 bits, where one bit is used to carry a dynamic bandwidth report upstream (Dynamic Bandwidth Report upstream, DBRu) flag of all slots allocated to the ONU, and the other bit is used to carry a physical layer operations, administration, and maintenance upstream (Physical Layer OAM upstream, PLOAMu) flag of a 1^{st} slot allocated to the ONU.

A length of the burst profile subfield is 2 bits, and the burst profile subfield is used to carry an FEC codeword format, that is, is used to carry the first indication information. A value of the 2 bits may be used as a number of the codeword format. For example, when the 2 bits are 00, it indicates a codeword format 1; or when the 2 bits are 01 or 10, it indicates a codeword format 2. For another example, when the 2 bits are 00, it indicates a codeword format 1; when the 2 bits are 01, it indicates a codeword format 2; or when the 2 bits are 10, it indicates a codeword format 3.

The burst profile subfield may be used to carry the identifier of the target FEC codeword format, and an existing frame header format does not need to be modified, which facilitates application implementation of the method.

Optionally, in one superframe, values of burst profile subfields in different allocation structures may be the same or different. That is, the OLT may indicate a same FEC codeword format or different FEC codeword formats to different ONUs.

Optionally, in two adjacent superframes, values of burst profile subfields in allocation structures corresponding to a same ONU may be the same or different. That is, for a same ONU, FEC codeword formats used for two pieces of adjacent upstream burst data may be the same or different.

Correspondingly, the ONU receives the superframe.

302: The ONU determines the target FEC codeword format based on the first indication information and a correspondence between an FEC codeword format and an identifier.

In step 302, the ONU first parses the superframe to obtain the first indication information from the frame header of the superframe; and then searches the correspondence between an FEC codeword format and an identifier for an FEC codeword format corresponding to the identifier in the first indication information, where the found FEC codeword format is the target FEC codeword format.

Optionally, the correspondence between an FEC codeword format and an identifier may be preconfigured in the ONU, or may be configured by the OLT by using second indication information.

If the correspondence between an FEC codeword format and an identifier is configured by the OLT by using the second indication information, the method may further include: The OLT sends the second indication information to the ONU, where the second indication information includes the correspondence between an FEC codeword format and an identifier. Correspondingly, the ONU receives and stores the second indication information.

Optionally, the second indication information is carried in an OMCI message or a PLOAM message. An occasion for sending the second indication information by the OLT is not limited in this embodiment of this application. The second indication information may be sent when the ONU goes online, or may be sent in a working process after the ONU goes online (for example, sent when the correspondence between an FEC codeword format and an identifier changes).

303: The ONU sends upstream burst data based on the target FEC codeword format.

The upstream burst data includes at least one FEC codeword, and each FEC codeword is obtained by encoding by using the target FEC codeword format. To be specific, step 303 includes: The ONU encodes valid data by using the target FEC codeword format, to obtain the at least one FEC codeword; and sends the at least one FEC codeword as the upstream burst data to the OLT.

Correspondingly, the OLT receives the upstream burst data. After receiving the upstream burst data, the OLT decodes the FEC codeword in the upstream burst data by using the target FEC codeword format of the ONU, to obtain the valid data sent by the ONU.

In this embodiment, the first indication information is carried in the BWMAP field, and an FEC codeword format of each piece of upstream burst data of the ONU may be separately indicated. In this way, flexibility is high.

Before sending the first indication information to the ONU, the OLT first generates the first indication information. The following describes an example of a manner in which the OLT generates the first indication information.

FIG. 5 is a diagram of a process of generating first indication information according to an embodiment of this application. As shown in FIG. 5, generating the first indication information may include the following steps 501 to 504.

501: An OLT determines link quality of an ONU.

In this embodiment of this application, the link quality is quality of an optical link from the ONU to the OLT, and may be represented by using an optical power budget. Therefore, step 501 may include: The OLT obtains an optical power budget of the ONU.

A manner of obtaining the optical power budget by the OLT includes but is not limited to: receiving an optical signal sent by the ONU, where the optical signal is sent by the ONU at specified transmit power; and detecting power of the optical signal to obtain the optical power budget of the ONU.

502: The OLT determines a first encoding strategy of the ONU based on the link quality of the ONU.

Optionally, the first encoding strategy indicates a correspondence between a data length range and an FEC codeword format, and different data length ranges correspond to different FEC codeword formats. For example, the first encoding strategy includes at least one threshold, and the at least one threshold is used to limit the data length range.

When the ONU supports two FEC codeword formats, the first encoding strategy may include one threshold, where being greater than or equal to the threshold is one data length range, and being less than the threshold is another data length range. The first encoding strategy indicates to use a first codeword format as a target FEC codeword format when a length of upstream burst data is greater than or equal to the threshold; or use a second codeword format as a target FEC codeword format when a length of upstream burst data is less than the threshold.

For example, the first codeword format is the foregoing codeword format 1, and the second codeword format is the foregoing codeword format 2.

Optionally, the threshold is less than a payload value of the first codeword format, or the threshold is less than a smaller value between a payload value of the first codeword format and a payload value of the second codeword format.

When the ONU supports three FEC codeword formats, the first encoding strategy may include two thresholds, where the two thresholds may be a first threshold and a second threshold. The first threshold is greater than the second threshold. Being greater than or equal to the first threshold is one data length range, and corresponds to a first codeword format; being less than the first threshold and greater than or equal to the second threshold is another data length range, and corresponds to a second codeword format; and being less than the second threshold is still another data length range, and corresponds to a third codeword format. The first encoding strategy indicates to use the first codeword format as a target FEC codeword format when a length of upstream burst data is greater than or equal to the first threshold; use the second codeword format as a target FEC codeword format when a length of upstream burst data is less than the first threshold and greater than or equal to the second threshold; or use the third codeword format as a target FEC codeword format when a length of upstream burst data is less than the second threshold.

For example, the first codeword format is the foregoing codeword format 3, the second codeword format is the foregoing codeword format 1, and the third codeword format is the foregoing codeword format 2.

Optionally, the first threshold is less than a payload value of the first codeword format, or the first threshold is less than a smaller value between a payload value of the first codeword format and a payload value of the second codeword format. The second threshold is less than the payload value of the second codeword format, or the second threshold is less than a smaller value between the payload value of the second codeword format and a payload value of the third codeword format.

In this embodiment of this application, a value of the threshold in the encoding strategy is related to factors such as receiving performance of the first optical communication device and the link quality of the second optical communication device, and a threshold that can meet data transmission performance (for example, a bit error rate requirement) may be obtained through testing.

503: The OLT determines the target FEC codeword format based on the first encoding strategy and the length of the upstream burst data of the ONU.

In step 503, the OLT needs to first determine the length of the upstream burst data of the ONU, and then determines the target FEC codeword format based on the first encoding strategy and the length of the upstream burst data of the ONU. That the OLT determines the length of the upstream burst data of the ONU herein means that the OLT determines upstream slots allocated to the ONU, and a length of the upstream slots allocated to the ONU is the length of the upstream burst data of the ONU. A manner of allocating the upstream slot to the ONU is not limited in this embodiment of this application. The upstream slot may be allocated to the ONU by using, for example, a dynamic bandwidth algorithm.

504: The OLT generates the first indication information based on the target FEC codeword format and a correspondence between an FEC codeword format and an identifier.

That is, an identifier of the target FEC codeword format is used as the first indication information.

Optionally, the OLT may periodically obtain link quality of each ONU, and may update an encoding strategy of the ONU when the link quality of the ONU changes to a specific extent. Therefore, the method may further include: determining a second encoding strategy of the second optical communication device based on second link quality of the second optical communication device, where the second encoding strategy indicates a correspondence between a data length range and an FEC codeword format, and different data length ranges correspond to different FEC codeword formats.

First link quality is different from the second link quality. For example, a difference between the first link quality and the second link quality is greater than or equal to a specified value; or the first link quality and the second link quality belong to different quality division ranges.

Manners of data length range division that correspond to the first encoding strategy and the second encoding strategy are different. In some examples, when the first encoding strategy includes at least one threshold, the second encoding strategy also includes at least one threshold, a quantity of thresholds in the first encoding strategy is equal to a quantity of thresholds in the second encoding strategy, and the thresholds are in one-to-one correspondence, but a value of at least one threshold in the second encoding strategy is different from a value of a corresponding threshold in the first encoding strategy. For example, the first encoding strategy and the second encoding strategy each include a first threshold and a second threshold. A value of the first threshold in the first encoding strategy is different from a value of the first threshold in the second encoding strategy, and/or a value of the second threshold in the first encoding strategy is different from a value of the second threshold in the second encoding strategy.

In a using process of the ONU, an environment in which the ONU is located changes, and a device (for example, an optical fiber connected to the ONU) ages as the service time increases. Therefore, the link quality of the ONU may also change. When the link quality of the ONU changes, error correction capabilities of an FEC codeword are different. For example, when the link quality is good, a requirement on the error correction capability of the FEC codeword is low; or when the link quality is poor, a requirement on the error correction capability of the FEC codeword is high. Therefore, when the link quality of the ONU changes, a value of a threshold corresponding to the ONU may be properly adjusted, to meet a data transmission performance requirement.

In an example, the first link quality is higher than the second link quality, and the threshold in the first encoding strategy is greater than the corresponding threshold in the second encoding strategy. For example, it is assumed that the first encoding strategy and the second encoding strategy each include one threshold that indicates to use the foregoing codeword format 1 when the length of the upstream burst data of the second optical communication device is greater than or equal to the threshold, or use the foregoing codeword format 2 when the length of the upstream burst data of the second optical communication device is less than the threshold. For the first link quality, it is found through testing that, when the length of the upstream burst data of the second optical communication device is less than 1200B, upstream transmission performance can be met by performing FEC encoding by using the codeword format 2, while when the length of the upstream burst data of the second optical communication device is greater than or equal to 1200B, upstream transmission performance can be met only when FEC encoding is performed by using the codeword format 1. Therefore, the threshold in the first encoding strategy is 1200B. For the second link quality, it is found through testing that, when the length of the upstream burst data of the second optical communication device is less than 800B, upstream transmission performance can be met by performing FEC encoding by using the codeword format 2, while when the length of the upstream burst data of the second optical communication device is greater than or equal to 800B, upstream transmission performance can be met only when FEC encoding is performed by using the codeword format 1. Therefore, the threshold in the first encoding strategy is 800B.

FIG. 6 is a diagram of a data transmission method according to an embodiment of this application. The method is jointly performed by an OLT and an ONU. In this embodiment, first indication information indicates a correspondence between a data length range and an FEC codeword format, and different data length ranges correspond to different FEC codeword formats. As shown in FIG. 6, the method includes the following steps.

601: The OLT sends, to the ONU, a message carrying the first indication information.

Optionally, the message may be an OMCI message or a PLOAM message.

In a possible implementation, the first indication information may include at least one threshold. The at least one threshold is used to obtain at least two data length ranges through division. A matching rule is preconfigured in the ONU, and the matching rule indicates a correspondence between a variable interval and an FEC codeword format. The variable interval is used to limit a quantity of data length ranges, and an endpoint of the variable interval is a variable. After receiving the first indication information, the ONU substitutes the threshold in the first indication information into the variable of the variable interval, to obtain the correspondence between a data length range and an FEC codeword format.

For example, it is assumed that the ONU supports two FEC codeword formats, and a matching rule that a variable interval (0, al) corresponds to a first codeword format, and a variable interval [a1, ∞) corresponds to a second codeword format is preconfigured in the ONU. In this case, the first indication information includes one threshold. When receiving the first indication information, the ONU substitutes the threshold into al, to obtain the correspondence between a data length range and an FEC codeword format.

In another possible implementation, the first indication information may include at least one threshold and at least two FEC codeword formats. A quantity of FEC codeword formats is equal to a quantity of thresholds plus 1.

Optionally, the message further includes time indication information, and the time indication information indicates start time at which the ONU uses a target FEC encoding format indicated by the first indication information. For example, the time indication information may be a number of a superframe or the like.

602: The ONU determines the target FEC encoding format based on a length of upstream burst data and the first indication information.

The length of the upstream burst data herein is determined based on a grant size subfield in an allocation structure corresponding to the ONU in the foregoing BWMAP field. For example, the length of the upstream burst data may be equal to a grant size corresponding to the ONU.

In step 602, an FEC codeword format corresponding to a data length range to which the length of the upstream burst data of the ONU belongs may be used as the target FEC codeword format.

603: The ONU sends the upstream burst data based on the target FEC codeword format.

For related content of step 603, refer to step 303. Details are not described herein again.

For the embodiment shown in FIG. 6, before sending the message carrying the first indication information, the OLT also needs to first generate the first indication information. The first indication information herein may be generated in the manner, in the foregoing steps 501 and 502, of determining a first encoding strategy of the ONU, and then at least a part of the first encoding strategy is used as the first indication information. For example, a threshold in the first encoding strategy is used as the first indication information.

In this embodiment, the OLT and the ONU each determine the corresponding target FEC codeword format based on the length of the upstream burst data of the ONU, and the OLT does not need to send, frame by frame, the first indication information indicating the target FEC codeword format.

FIG. 7 is a block diagram of a data transmission apparatus according to an embodiment of this application. The data transmission apparatus may be implemented as all or a part of a first optical communication device (for example, an OLT) by using software, hardware, or a combination thereof. As shown in FIG. 7, the apparatus 700 includes a sending unit 701 and a receiving unit 702.

The sending unit 701 is configured to send first indication information to a second optical communication device, where the first indication information indicates a target forward error correction FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads. The receiving unit 702 is configured to receive the upstream burst data sent by the second optical communication device, where the upstream burst data includes at least one FEC codeword, and the at least one FEC codeword is obtained by encoding by using the target FEC codeword format.

In a first possible implementation, the first indication information is an identifier of the target FEC codeword format.

Optionally, the first indication information is carried in a bandwidth map BWMAP field of a superframe header.

Optionally, the sending unit 701 is further configured to send second indication information to the second optical communication device, where the second indication information includes a correspondence between an FEC codeword format and an identifier.

Optionally, the second indication information is carried in an optical network unit management and control interface OMCI message or a physical layer operations, administration, and maintenance PLOAM message.

In a second possible implementation, the first indication information indicates a correspondence between a data length range and an FEC codeword format, and different data length ranges correspond to different FEC codeword formats.

Optionally, the first indication information is carried in an OMCI message or a PLOAM message.

Optionally, the apparatus further includes a determining unit 703. The determining unit 703 is configured to: determine a first encoding strategy of the second optical communication device based on first link quality of the second optical communication device, where the first encoding strategy indicates a correspondence between a data length range and an FEC codeword format, and different data length ranges correspond to different FEC codeword formats; and determine the target FEC codeword format based on the first encoding strategy and the length of the upstream burst data.

Optionally, the determining unit 703 is further configured to determine a second encoding strategy of the second optical communication device based on second link quality of the second optical communication device, where the second encoding strategy indicates a correspondence between a data length range and an FEC codeword format, and different data length ranges correspond to different FEC codeword formats, where the first link quality is different from the second link quality, and manners of data length range division that correspond to the first encoding strategy and the second encoding strategy are different.

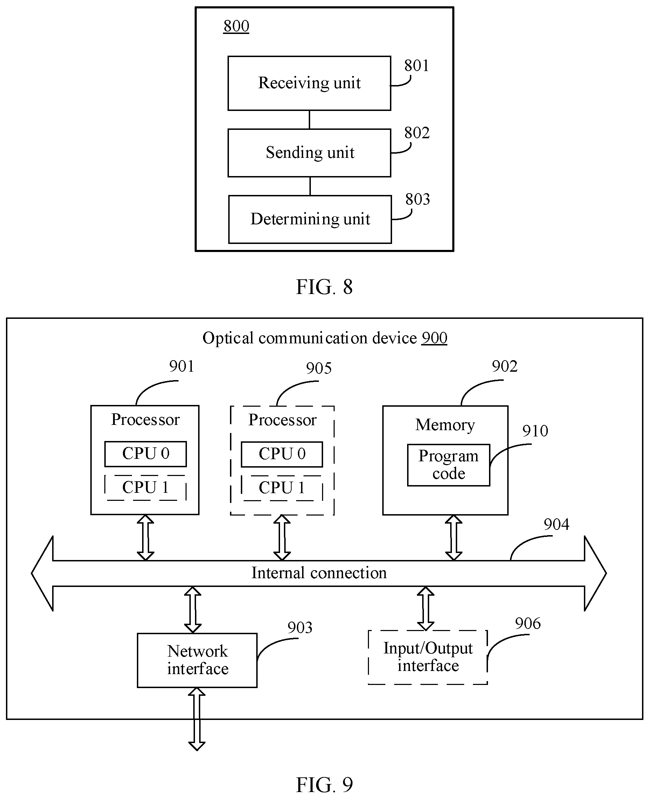

FIG. 8 is a block diagram of a data transmission apparatus according to an embodiment of this application. The data transmission apparatus may be implemented as all or a part of a second optical communication device (for example, an ONU) by using software, hardware, or a combination thereof. As shown in FIG. 8, the apparatus 800 includes a receiving unit 801 and a sending unit 802.

The receiving unit 801 is configured to receive first indication information sent by a first optical communication device, where the first indication information indicates a target FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads. The sending unit 802 is configured to send the upstream burst data, where the upstream burst data includes at least one FEC codeword, and the at least one FEC codeword is obtained by encoding by using the target FEC codeword format.

In a first possible implementation, the first indication information is an identifier of the target FEC codeword format.

Optionally, the first indication information is carried in a BWMAP field of a superframe header.

Optionally, the receiving unit 801 is further configured to receive second indication information sent by the first optical communication device, where the second indication information includes a correspondence between an FEC codeword format and an identifier.

Optionally, the second indication information is carried in an OMCI message or a PLOAM message.

Optionally, the apparatus further includes a determining unit 803, configured to determine the target FEC codeword format based on the first indication information and the correspondence between an FEC codeword format and an identifier.

In a second possible implementation, the first indication information indicates a correspondence between a data length range and an FEC codeword format, and different data length ranges correspond to different FEC codeword formats.

Optionally, the first indication information is carried in an OMCI message or a PLOAM message.

Optionally, the apparatus further includes a determining unit 803, configured to determine the target FEC codeword format based on the correspondence between a data length range and an FEC codeword format and the length of the upstream burst data sent by the second optical communication device.

It should be noted that when the data transmission apparatus provided in the foregoing embodiment performs data transmission, division of the foregoing functional units is merely used as an example for description. In actual application, the foregoing functions may be allocated to different functional units for implementation based on needs. That is, an internal structure of a device is divided into different functional units to implement all or some of the functions described above. In addition, the data transmission apparatuses provided in the foregoing embodiments and the data transmission method embodiments are based on a same idea. For specific implementation processes thereof, refer to the method embodiments. Details are not described herein again.

Descriptions of procedures corresponding to the foregoing accompanying drawings have respective focuses. For a part of a procedure that is not described in detail, refer to related descriptions of another procedure.

FIG. 9 is a diagram of a structure of an optical communication device 900 according to an embodiment of this application. As shown in FIG. 9, the optical communication device 900 includes at least one processor 901, a memory 902, and at least one network interface 903.

The processor 901 is, for example, a general-purpose central processing unit (central processing unit, CPU), a network processor (network processor, NP), a graphics processing unit (graphics processing unit, GPU), a neural-network processing unit (neural-network processing unit, NPU), a data processing unit (data processing unit, DPU), a microprocessor, or one or more integrated circuits for implementing the solutions of this application. For example, the processor 901 includes an application-specific integrated circuit (application-specific integrated circuit, ASIC), a programmable logic device (programmable logic device, PLD), or a combination thereof. The PLD is, for example, a complex programmable logic device (complex programmable logic device, CPLD), a field-programmable gate array (field-programmable gate array, FPGA), a generic array logic (generic array logic, GAL), or any combination thereof.

The memory 902 is, for example, a read-only memory (read-only memory, ROM) or another type of static storage device capable of storing static information and instructions, a random access memory (random access memory, RAM) or another type of dynamic storage device capable of storing information and instructions, an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Bluray disc, or the like), a magnetic disk storage medium or another magnetic storage device, or any other medium capable of carrying or storing expected program code in a form of instructions or a data structure and capable of being accessed by a computer. However, the memory 902 is not limited thereto. Optionally, the memory 902 exists independently and is connected to the processor 901 through an internal connection 904. Alternatively, the memory 902 is optionally integrated with the processor 901.

The network interface 903 is configured to communicate with another device or a communication network by using any transceiver-type apparatus. The network interface 903 includes, for example, at least one of a wired network interface or a wireless network interface. The wired network interface is, for example, an Ethernet interface. The Ethernet interface is, for example, an optical interface, an electrical interface, or a combination thereof. The wireless network interface is, for example, a wireless local area network (wireless local area network, WLAN) interface, a cellular network interface, or a combination thereof.

In some embodiments, the processor 901 includes one or more CPUs, such as a CPU 0 and a CPU 1 shown in FIG. 9.

In some embodiments, the optical communication device 900 optionally includes a plurality of processors, such as the processor 901 and a processor 905 shown in FIG. 9. Each of these processors is, for example, a single-core (single-CPU) processor or a multi-core (multi-CPU) processor. The processor herein is optionally one or more devices, circuits, and/or processing cores configured to process data (for example, computer program instructions).

In some embodiments, the optical communication device 900 further includes the internal connection 904. The processor 901, the memory 902, and the at least one network interface 903 are connected through the internal connection 904. The internal connection 904 includes a path for transferring information between the foregoing components. Optionally, the internal connection 904 is a board or a bus. Optionally, the internal connection 904 is classified into an address bus, a data bus, a control bus, and the like.

In some embodiments, the optical communication device 900 further includes an input/output interface 906. The input/output interface 906 is connected to the internal connection 904.

In some embodiments, the input/output interface 906 is configured to connect to an input device, to receive a command or data, for example, a random delay parameter or a maximum differential fiber distance, that is input by a user via the input device and that is in the foregoing method embodiments. The input device includes but is not limited to a keyboard, a touchscreen, a microphone, a mouse, a sensor device, or the like.

In some embodiments, the input/output interface 906 is further configured to connect to an output device. The input/output interface 906 outputs, via the output device, an intermediate result and/or a final result, for example, an encoding strategy, generated by the processor 901 by performing the foregoing method embodiments. The output device includes but is not limited to a display, a printer, a projector, and the like.

Optionally, the processor 901 implements the method in the foregoing embodiment by reading program code 910 stored in the memory 902, or the processor 901 implements the method in the foregoing embodiment by using internally stored program code. When the processor 901 implements the method in the foregoing embodiment by reading the program code 910 stored in the memory 902, the memory 902 stores program code for implementing the method provided in embodiments of this application.

For more details of implementing the foregoing functions by the processor 901, refer to the descriptions in the foregoing method embodiments. Details are not described herein again.

During implementation, the optical communication device 900 includes a board and an optical module, and the optical module is connected to the board in a pluggable manner. Optionally, the processor 901 may be disposed on the board or disposed in the optical module.

In some embodiments, a computer-readable storage medium is further provided. The computer-readable storage medium stores computer instructions. When the computer instructions stored in the computer-readable storage medium are executed by an optical communication device, the optical communication device is enabled to perform steps performed by the OLT in the data transmission method provided in the foregoing method embodiments, or perform steps performed by the ONU in the data transmission method provided in the foregoing method embodiments.

In some embodiments, a computer program product is further provided. The computer program product includes one or more computer program instructions. When the computer program instructions are loaded and run by a computer, the computer is enabled to perform steps performed by the OLT in the data transmission method provided in the foregoing method embodiments, or perform steps performed by the ONU in the data transmission method provided in the foregoing method embodiments.

In some embodiments, a chip is further provided, and includes a memory and a processor. The memory is configured to store computer instructions. The processor is configured to invoke the computer instructions from the memory and run the computer instructions, to perform steps performed by the OLT in the data transmission method, or perform steps performed by the ONU in the data transmission method provided in the foregoing method embodiments.

Optionally, the chip may be an optical digital processor (optical digital signal processor, ODSP) chip, a PON media access control (media access control, MAC) chip, a PON system-on-chip (system on chip, SoC) chip, or the like. The OSDP chip is integrated into an optical module, and the PON MAC chip or the PON SoC chip is integrated on a board.

Unless otherwise defined, technical terms or scientific terms used herein should have a general meaning understood by a person of ordinary skill in the art of this application. In the specification and claims of the patent application, "first", "second", "third", and similar terms do not indicate any order, quantity, or importance, but are merely used to distinguish between different components. Likewise, "a", "one", or another similar term does not indicate a quantity limitation either, but indicates that there is at least one. "Include", "comprise", or another similar term means that an element or object before the "include" or "comprise" encompasses elements or objects and equivalents thereof listed after the "include" or "comprise", and other elements or objects are not excluded.

The foregoing descriptions are merely an embodiment of this application, but are not intended to limit this application. Any modification, equivalent replacement, improvement, or the like made within the principle of this application shall fall within the protection scope of this application.

## Claims

1. A data transmission method, wherein the method comprises:
sending, by a first optical communication device, first indication information to a second optical communication device, wherein the first indication information indicates a target forward error correction FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads; and
receiving the upstream burst data sent by the second optical communication device, wherein the upstream burst data comprises at least one FEC codeword, and the at least one FEC codeword is obtained by encoding by using the target FEC codeword format.

2. The method according to claim 1, wherein the first indication information is an identifier of the target FEC codeword format.

3. The method according to claim 2, wherein the first indication information is carried in a bandwidth map BWMAP field of a superframe header.

4. The method according to claim 2 or 3, wherein the method further comprises:
sending second indication information to the second optical communication device, wherein the second indication information comprises a correspondence between an FEC codeword format and an identifier.

5. The method according to claim 4, wherein the second indication information is carried in an optical network unit management and control interface OMCI message or a physical layer operations, administration, and maintenance PLOAM message.

6. The method according to claim 1, wherein the first indication information indicates a correspondence between a data length range and an FEC codeword format, and different data length ranges correspond to different FEC codeword formats.

7. The method according to claim 6, wherein the first indication information is carried in an OMCI message or a PLOAM message.

8. The method according to any one of claims 1 to 7, wherein the method further comprises:
determining a first encoding strategy of the second optical communication device based on first link quality of the second optical communication device, wherein the first encoding strategy indicates a correspondence between a data length range and an FEC codeword format, and different data length ranges correspond to different FEC codeword formats; and
determining the target FEC codeword format based on the first encoding strategy and the length of the upstream burst data.

9. The method according to claim 8, wherein the method further comprises:
determining a second encoding strategy of the second optical communication device based on second link quality of the second optical communication device, wherein the second encoding strategy indicates a correspondence between a data length range and an FEC codeword format, and different data length ranges correspond to different FEC codeword formats, wherein
the first link quality is different from the second link quality, and manners of data length range division that correspond to the first encoding strategy and the second encoding strategy are different.

10. The method according to any one of claims 1 to 9, wherein a coding overhead of an FEC codeword format corresponding to a first data length range is greater than a coding overhead of an FEC codeword format corresponding to a second data length range, and any length in the first data length range is greater than any length in the second data length range.

11. A data transmission method, wherein the method comprises:
receiving, by a second optical communication device, first indication information sent by a first optical communication device, wherein the first indication information indicates a target FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads; and
sending the upstream burst data to the first optical communication device, wherein the upstream burst data comprises at least one FEC codeword, and the at least one FEC codeword is obtained by encoding by using the target FEC codeword format.

12. The method according to claim 11, wherein the first indication information is an identifier of the target FEC codeword format.

13. The method according to claim 12, wherein the first indication information is carried in a BWMAP field of a superframe header.

14. The method according to claim 12 or 13, wherein the method further comprises:
receiving second indication information sent by the first optical communication device, wherein the second indication information comprises a correspondence between an FEC codeword format and an identifier.

15. The method according to claim 14, wherein the second indication information is carried in an optical network unit management and control interface OMCI message or a physical layer operations, administration, and maintenance PLOAM message.

16. The method according to any one of claims 12 to 15, wherein the method further comprises:
determining the target FEC codeword format based on the first indication information and the correspondence between an FEC codeword format and an identifier.

17. The method according to claim 11, wherein the first indication information indicates a correspondence between a data length range and an FEC codeword format, and different data length ranges correspond to different FEC codeword formats.

18. The method according to claim 17, wherein the first indication information is carried in an OMCI message or a PLOAM message.

19. The method according to claim 17 or 18, wherein the method further comprises:
determining the target FEC codeword format based on the correspondence between a data length range and an FEC codeword format and the length of the upstream burst data sent by the second optical communication device.

20. The method according to any one of claims 11 to 19, wherein a coding overhead of an FEC codeword format corresponding to a first data length range is greater than a coding overhead of an FEC codeword format corresponding to a second data length range, and any length in the first data length range is greater than any length in the second data length range.

21. A data transmission apparatus, wherein the apparatus comprises:
a sending unit, configured to send first indication information to a second optical communication device, wherein the first indication information indicates a target forward error correction FEC codeword format, the target FEC codeword format is related to a length of upstream burst data of the second optical communication device, lengths of upstream burst data belonging to different data length ranges correspond to different FEC codeword formats, and different FEC codeword formats correspond to different coding overheads; and
a receiving unit, configured to receive the upstream burst data sent by the second optical communication device, wherein the upstream burst data comprises at least one FEC codeword, and the at least one FEC codeword is obtained by encoding by using the target FEC codeword format.

22. The apparatus according to claim 21, wherein the first indication information is an identifier of the target FEC codeword format.

23. The apparatus according to claim 22, wherein the first indication information is carried in a bandwidth map BWMAP field of a superframe header.

24. The apparatus according to claim 22 or 23, wherein the sending unit is further configured to send second indication information to the second optical communication device, wherein the second indication information comprises a correspondence between an FEC codeword format and an identifier.

25. The apparatus according to claim 24, wherein the second indication information is carried in an optical network unit management and control interface OMCI message or a physical layer operations, administration, and maintenance PLOAM message.

26. The apparatus according to claim 21, wherein the first indication information indicates a correspondence between a data length range and an FEC codeword format, and different data length ranges correspond to different FEC codeword formats.

27. The apparatus according to claim 26, wherein the first indication information is carried in an OMCI message or a PLOAM message.

28. The apparatus according to any one of claims 21 to 27, wherein the apparatus further comprises:
a determining unit, configured to: determine a first encoding strategy of the second optical communication device based on first link quality of the second optical communication device, wherein the first encoding strategy indicates a correspondence between a data length range and an FEC codeword format, and different data length ranges correspond to different FEC codeword formats; and determine the target FEC codeword format based on the first encoding strategy and the length of the upstream burst data.

29. The apparatus according to claim 28, wherein the determining unit is further configured to determine a second encoding strategy of the second optical communication device based on second link quality of the second optical communication device, wherein the second encoding strategy indicates a correspondence between a data length range and an FEC codeword format, and different data length ranges correspond to different FEC codeword formats, wherein
the first link quality is different from the second link quality, and manners of data length range division that correspond to the first encoding strategy and the second encoding strategy are different.

30. The apparatus according to any one of claims 21 to 29, wherein a coding overhead of an FEC codeword format corresponding to a first data length range is greater than a coding overhead of an FEC codeword format corresponding to a second data length range, and any length in the first data length range is greater than any length in the second data length range.

31. A data transmission apparatus, wherein the apparatus comprises:
a receiving unit, configured to receive first indication information sent by a first optical communication device, wherein the first indication information indicates a target FEC codeword format, the target FEC codeword format is related to a length of upstream burst data of the data transmission apparatus, lengths of upstream burst data belonging to different data length ranges correspond to different FEC codeword formats, and different FEC codeword formats correspond to different coding overheads; and
a sending unit, configured to send the upstream burst data, wherein the upstream burst data comprises at least one FEC codeword, and the at least one FEC codeword is obtained by encoding by using the target FEC codeword format.

32. The apparatus according to claim 31, wherein the first indication information is an identifier of the target FEC codeword format.

33. The apparatus according to claim 32, wherein the first indication information is carried in a BWMAP field of a superframe header.

34. The apparatus according to claim 32 or 33, wherein the receiving unit is further configured to:
receive second indication information sent by the first optical communication device, wherein the second indication information comprises a correspondence between an FEC codeword format and an identifier.

35. The apparatus according to claim 34, wherein the second indication information is carried in an optical network unit management and control interface OMCI message or a physical layer operations, administration, and maintenance PLOAM message.

36. The apparatus according to any one of claims 32 to 35, wherein the apparatus further comprises:
a determining unit, configured to determine the target FEC codeword format based on the first indication information and the correspondence between an FEC codeword format and an identifier.

37. The apparatus according to claim 31, wherein the first indication information indicates a correspondence between a data length range and an FEC codeword format, and different data length ranges correspond to different FEC codeword formats.

38. The apparatus according to claim 37, wherein the first indication information is carried in an OMCI message or a PLOAM message.

39. The apparatus according to claim 37 or 38, wherein the apparatus further comprises:
a determining unit, configured to determine the target FEC codeword format based on the correspondence between a data length range and an FEC codeword format and the length of the upstream burst data sent by the data transmission apparatus.

40. The apparatus according to any one of claims 31 to 39, wherein a coding overhead of an FEC codeword format corresponding to a first data length range is greater than a coding overhead of an FEC codeword format corresponding to a second data length range, and any length in the first data length range is greater than any length in the second data length range.

41. An optical communication system, comprising a first optical communication device and a second optical communication device, wherein the first optical communication device is configured to perform the method according to any one of claims 1 to 10, and the second optical communication device is configured to perform the method according to any one of claims 11 to 20.

42. An optical communication device, wherein the optical communication device comprises a processor and a memory, the memory is configured to store a software program, and the processor runs or executes the software program stored in the memory, to enable the optical communication device to implement the method according to any one of claims 1 to 10, or implement the method according to any one of claims 11 to 20.

43. A computer-readable storage medium, wherein the computer-readable storage medium is used to store program code executed by a processor, and the program code is used to implement the method according to any one of claims 1 to 10, or implement the method according to any one of claims 11 to 20.
